# EUROPÄISCHE PATENTSCHRIFT

(11) **EP 0 571 818 B1**
(45) Veröffentlichungstag und Bekanntmachung des Hinweises auf die Patenterteilung: **29.01.1997**
(21) Anmeldenummer: 93107698.8
(22) Anmeldetag: 12.05.1993
(51) Int. Cl.: B23B 51/10

(54) **Entgratwerkzeug mit zusätzlichem Schneidwerkzeug**
Deburrring tool with additional cutting tool
Outil d'ébavurage avec outil de coupe additionnel

(30) Priorität: 23.05.1992 DE 9207000 U
(43) Veröffentlichungstag der Anmeldung: 01.12.1993
(73) Patentinhaber: Heule, Heinrich, CH-9434 Au (CH)
(72) Erfinder: Heule, Heinrich, CH-9434 Au (CH)
(74) Vertreter: Riebling, Peter, Dr.-Ing., Patentanwalt

(56) Entgegenhaltungen:
- EP-A- 0 075 061
- EP-A- 0 129 116
- DE-U- 8 912 860
- US-A- 2 663 203
- WERKSTATT UND BETRIEB Bd. 119, Nr. 7, Juli 1986, MUNCHEN DE Seite A46 'Schaftfräser zum Fasen'

## Beschreibung

Gegenstand der vorliegenden Erfindung ist ein Entgratwerkzeug nach dem Oberbegriff des Patentanspruchs 1 wie aus EP-A-0129116 bekannt.

Derartige Entgratwerkzeuge sind in vielfältigen Ausführungsformen aus Patenten des gleichen Anmelders bekannt geworden. Kennzeichnend für derartige Entgratwerkzeuge ist, daß in einem Werkzeughalter ein oder mehrere radial verstellbare Schneidmesser angeordnet sind, die entweder beim Eindringen in eine Durchgangsbohrung den oberen Bohrungsrand entgraten können und/oder ein Durchfahren durch die Durchgangsbohrung und beim Zurückziehen des Werkzeughalters den rückwärtigen Bohrungsrand entgraten.

Beim Durchgang durch die Durchgangsbohrung werden die verstellbaren Schneidmesser in den Werkzeughalter radial einwärts verstellt, um nicht die Innenfläche der Durchgangsbohrung in unerwünschter Weise zu bearbeiten.

Bei der Anwendung derartiger Entgratwerkzeuge hat es sich gezeigt, daß es vorteilhaft wäre, mit einem derartigen Entgratwerkzeug noch weitere Bearbeitungvorgänge an Bohrungen vorzunehmen, um den Einsatzbereich des bekannten Entgratwerkzeuges universeller zu gestalten.

Der Erfindung liegt deshalb die Aufgabe zugrunde, ein Entgratwerkzeug der eingangs genannten Art so weiterzubilden, daß nacheinanderfolgend mehrere unterschiedliche Bearbeitungsvorgänge an einer Bohrung (Sack- oder Durchgangsbohrung) vorgenommen werden können.

Zur Lösung der gestellten Aufgabe ist die Erfindung durch die technische Lehre des Anspruchs 1 gekennzeichnet.

Wesentliches Merkmal der Erfindung ist, daß nun die an sich bekannten, verstellbaren Schneidmesser des Entgratwerkzeuges mit weiteren Schneidwerkzeugen kombiniert sind, welche zusätzliche Schneid- und Entgratoperationen an beliebigen Bereichen der Bohrung gestatten.

Hierbei ist es in einer ersten Ausführungsform der Erfindung vorgesehen, daß die Schneidwerkzeuge in Vorschubrichtung hinter den verstellbaren Schneidmessern des Entgratwerkzeuges angebracht sind, so daß die zusätzlichen Schneid- und Entgratoperationen in Vorschubrichtung des Werkzeughalters an der Vorderseite der Bohrung erfolgen.

In einer Weiterbildung der vorliegenden Erfindung ist vorgesehen, daß weitere Schneidwerkzeuge in Vorschubrichtung vor den bekannten Schneidmessern angeordnet sind. Derartige Schneidwerkzeuge können z.B. ein Bohrer oder Schneidmesser sein, die - wie gesagt - in Vorschubrichtung vor den bekannten Schneidmessern angeordnet sind. Damit besteht der Vorteil, daß in Vorschubrichtung des Werkzeughalters zunächst z.B. der an der Spitze des Werkzeughalters angeordnete Bohrer in Tätigkeit tritt und die Bohrung entsprechend bearbeitet, wonach dann die ansich bekannten, radial verstellbaren, Schneidmesser in Tätigkeit treten.

Danach können die in Vorschubrichtung hinten hinter den bekannten Schneidmessern angeordneten Schneidwerkzeuge noch zusätzlich in Tätigkeit treten.

Die vorliegende Erfindung umfasst also den Erfindungsgedanken, daß sowohl in Vorschubrichtung vor den bekannten Schneidmessern als auch in Vorschubrichtung hinter den bekannten Schneidmessern entsprechende weitere Schneidwerkzeuge am Werkzeughalter befestigt sind, die als Schneidplatten, Bohrer, Fräser, Schleifwerkzeuge oder dergleichen ausgebildet sind. Damit wird der Einsatzzweck des erfindungsgemässen Entgratwerkzeuges wesentlich erweitert, denn neben der bekannten Entgratung von Bohrungsrändern von Sack- oder Durchgangsbohrungen kommen nun neuerungsgemäss die weiteren Schneidwerkzeuge zum Einsatz.

Die vorher erwähnten Schneidwerkzeuge können zu beliebigen spanabhebenden Beabeitungen von Flächen der Bohrung oder auch von Rändern der Bohrung verwendet werden.

So ist es z.B. in einer bevorzugten Ausführungsform der Erfindung vorgesehen, Fasenmesser zu verwenden, welche den in Vorschubrichtung vorne liegenden Bohrungsrand anfasen.

Es können auch Schneidwerkzeuge in Form von Planmessern verwendet werden, welche Planflächen innerhalb oder außerhalb der Bohrung bearbeiten können.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen - einschließlich der Zusammenfassung - offenbarten Angaben und Merkmale, insbesondere die in den Zeichnungen dargestellte räumliche Ausbildung werden als erfindungswesentlich beansprucht, soweit sie einzeln oder in Kombination gegenüber dem Stand der Technik neu sind.

Im folgenden wird die Erfindung anhand von mehrere Ausführungswege darstellenden Zeichnungen näher erläutert. Hierbei gehen aus den Zeichnungen und ihrer Beschreibung weitere wesentliche Merkmale und Vorteile der Erfindung hervor.

Es zeigen:
- Figur 1:: schematisiert die Darstellung eines Entgratwerkzeuges nach der Erfindunng beim Einsatz der erfindungsgemäßen Schneidwerkzeuge,
- Figur 2:: Entgratwerkzeug nach Figur 1 beim Rückwärtshub,
- Figur 3:: das Entgratwerkzeug nach den Figuren 1 und 2 nach dem Herausfahren aus der Durchgangsbohrung mit Anordnung weiterer Schneidwerkzeuge.

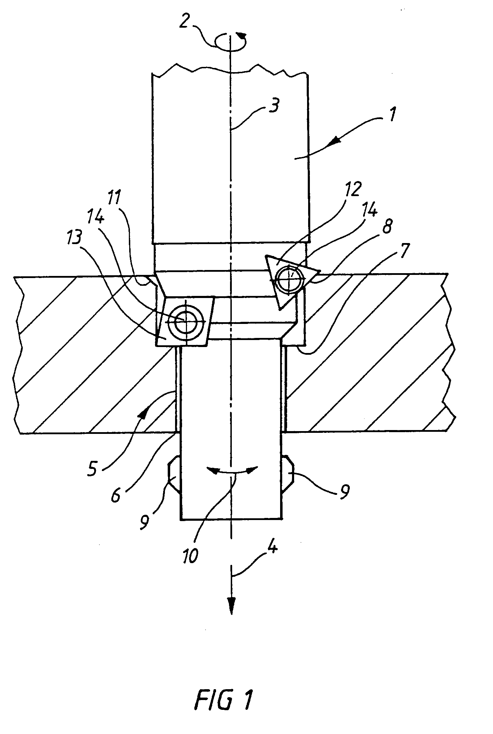

Gemäß Figur 1 ist ein Werkzeughalter 1 um seine Längsachse 3 beispielsweise in Pfeilrichtung 2 drehend angetrieben.

In an sich bekannter Weise weist der Werkzeughalter 1 einen Schaft 21 verminderten Durchmessers auf, in dem in bekannter Weise Schneidmesser 9 verstellbar angeordnet sind, welche in den Pfeilrichtungen 10 radial auswärts bzw. in Gegenrichtung hierzu radial einwärts verstellbar ausgebildet sind.

In der Stellung nach Figur 1 ist das Entgratwerkzeug bereits durch eine Stufenbohrung 5 (Durchgangsbohrung) hindurchgefahren, wobei bei dem Durchfahren des Entgratwerkzeuges in Vorschubrichtung 4 durch die Stufenbohrung 5 die Schneidmesser 9 in Gegenrichtung zu den eingezeichneten Pfeilrichtungen 10 eingefahren waren, so daß die Schneidmesser 9 nicht die Innenflächen der Stufenbohrung 5 in unerwünschter Weise bearbeiten.

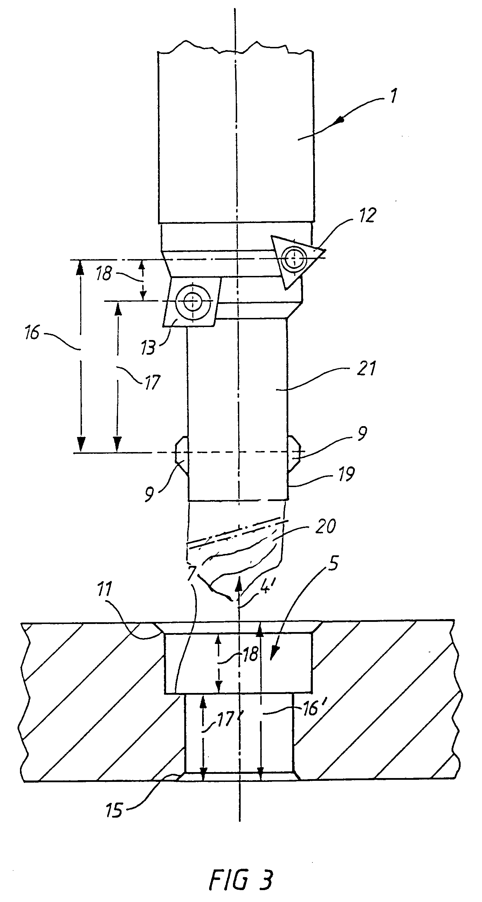

Im gezeigten Ausführungsbeispiel sind am Werkzeughalter 1 in axialem Abstand hinter den Schneidmessern 9 weitere Schneidwerkzeuge 12,13 am Werkzeughalter 1 befestigt. Der gegenseitige Abstand 18 (Figur 3) zwischen den Schneidwerkzeugen 12,13 ist so gewählt, daß in der gezeigten Eingriffsstellung nach Figur 1 das als Fasenmesser ausgebildete, obere Schneidwerkzeug 12 den oberen Bohrungsrand 8 mit einer schrägen Fase 11 versieht, während das als Planmesser ausgebildete, untere Schneidwerkzeug 13 eine Planfläche 7 im Bereich der Stufenbohrung 5 bearbeitet.

Der untere Bohrungsrand 6 der Stufenbohrung 5 ist noch nicht bearbeitet.

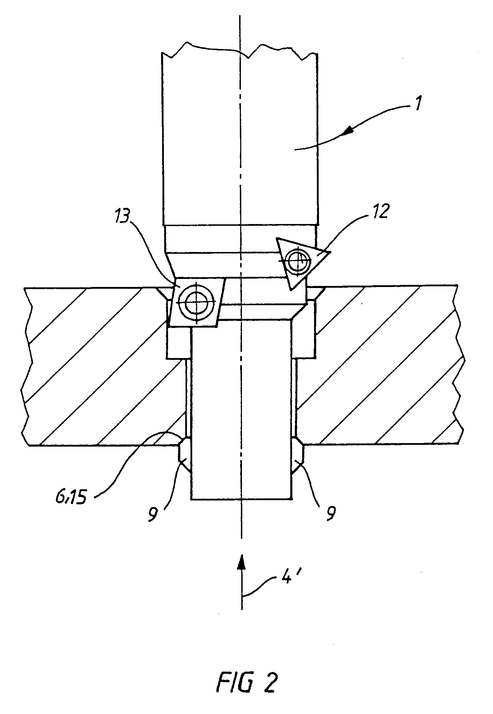

Nach erfolgter Bearbeitung des oberen Bohrungsrandes 8 durch das Schneidwerkzeug 12 bzw. der Planfläche 7 durch das Schneidwerkzeug 13 fährt das Entgratwerkzeug in Pfeilrichtung 4' entgegen der Vorschubrichtung 4 aus der Stufenbohrung 5 gemäss Figur 2 heraus, wodurch die Schneidwerkzeuge 12,13 ausser Eingriff mit den zu bearbeitenden Flächen kommen.

Hierbei kommen jetzt gleichzeitig die Schneidmesser 9 in Eingriff mit dem unteren Bohrungsrand 6 und bringen dort eine entsprechende Fase 15 an.

Danach werden die Schneidmesser 9 in Gegenrichtung zur Pfeilrichtung 10 radial einwärts in den Schaft 21 verstellt und dort festgehalten, bis das Entgratwerkzeug aus der Stufenbohrung 5 in Pfeilrichtung 4' gemäss Figur 3 herausgefahren ist.

Es sei noch erwähnt, daß die Schneidwerkzeuge 12,13 in entsprechenden Haltern 14 auswechselbar am Werkzeughalter 1 befestigt sind.

Die Figur 3 zeigt als weitere Ausführungsform die Möglichkeit, daß an der Stirnseite des Schaftes 21 weitere Schneidwerkzeuge 20 vorgesehen werden können, wobei diese Schneidwerkzeuge 20 z.B. als Bohrer oder Fräser ausgebildet sind.

Ebenso ist es möglich, daß unterhalb der Schneidmesser 9, etwa bei Position 19 weitere Schneidwerkzeuge vorgesehen sind, z.B. Schneidwerkzeuge in der Art der gezeigten Schneidwerkzeuge 12 oder 13, um in Vorschubrichtung 4 eine entsprechende Bearbeitung der Stufenbohrung zu gewährleisten.

Der Abstand 16 des Schneidwerkzeuges 12 von dem Schneidmesser 9 ist größer gewählt als der Abstand 16' vom oberen Bohrungsrand 8 zum unteren Bohrungsrand 6, um zu gewährleisten, daß die Schneidmesser 9 erst beim Rückwärtshub (Pfeilrichtung 4') gemäss Figur 2 in Eingriff mit dem unteren Bohrungsrand 6 kommen, während die Schneidwerkzeuge 12 bereits schon außer Eingriff mit dem oberen Bohrungsrand 8 sind.

In analoger Weise gilt dies für die Abstände 17,17' hinsichtlich des Schneidwerkzeuges 13.

Insgesamt ergibt sich mit dem erfindungsgemäßen Entgratwerkzeug eine universelle Einsetzbarkeit, nämlich neben dem Entgraten von entsprechenden Bohrungsrändern mit ansich bekanntem Schneidmesser 9 können noch weitere spanabhebende Bearbeitungsvorgänge an der Stufenbohrung 5 vorgenommen werden.

Es versteht sich von selbst, daß die gezeigten Schneidwerkzeuge 12,13,20 nur beispielhaft sind. Statt eines Schneidwerkzeuges 12 oder 13 können auch mehrere gleichmässig verteilt am Umfang des Werkzeughalters 1 angeordnet werden. Ebenso ist es selbstverständlich möglich, die Schneidwerkzeuge auf unterschiedlichen Radien am Werkzeughalter 1 anzuordnen, so wie dies beispielsweise in Figur 3 gezeigt ist. Die Schneidwerkzeuge 12,13 sind bevorzugt als Wendelschneidplatten ausgebildet, um eine optimale Standzeit zu gewährleisten.

### ZEICHNUNGS-LEGENDE

- 1: Werkzeughalter
- 2: Pfeilrichtung
- 3: Längsachse
- 4: Vorschubrichtung
- 5: Stufenbohrung
- 6: Bohrungsrand (unten(
- 7: Planfläche
- 8: Bohrungsrand (oben)
- 9: Schneidmesser
- 10: Pfeilrichtungen
- 11: Fase
- 12: Schneidwerkzeug
- 13: Schneidwerkzeug
- 14: Halter
- 15: Fase
- 16: Abstand 16'
- 17: Abstand 17'
- 18: Abstand
- 19: Position
- 20: Schneidwerkzeug
- 21: Schaft

## Patentansprüche

1. Entgratwerkzeug zum zentrischen Entgraten von Bohrungsrändern von Bohrungen, bestehend aus einem drehend angetriebenen Werkzeughalter (1), an dem ein oder mehrere radial verstellbare Schneidmesser (9) angeordnet sind, **dadurch gekennzeichnet**, daß in axialem Abstand (16,17,18) von den Schneidmessern (9) entfernt am Werkzeughalter (1) weitere Schneidwerkzeuge (12,13,20) angeordnet sind.

2. Entgratwerkzeug nach Anspruch 1, **dadurch gekennzeichnet**, daß die weiteren Schneidwerkzeuge (12,13,20) in Vorschubrichtung (4) hinter den Schneidmessern (9) angeordnet sind.

3. Entgratwerkzeug nach Anspruch 1 oder 2, **dadurch gekennzeichnet**, daß die weiteren Schneidwerkzeuge (12,13,20) in Vorschubrichtung (4) vor den Schneidmessern (9) angeordnet sind.

4. Entgratwerkzeug nach einem der Ansprüche 1 - 3, **dadurch gekennzeichnet**, daß das Schneidwerkzeug (12) als Fasen- oder Formmesser ausgebildet ist.

5. Entgratwerkzeug nach einem der Ansprüche 1 - 3, **dadurch gekennzeichnet**, daß das Schneidwerkzeug (13) als Plan- oder Formmesser ausgebildet ist.

6. Entgratwerkzeug nach einem der Ansprüche 1 - 3, **dadurch gekennzeichnet**, daß das Schneidwerkzeug (20) als Bohrer oder Fräser ausgebildet ist.

## Claims

1. A deburring tool for the central deburring of bore edges of bores, consisting of a rotatably driven tool holder (1) on which one or more radially adjustable cutting blades (9) are arranged, characterised in that at an axial distance (16, 17, 18) from the cutting blades (9) further cutting tools (12 13, 20) are arranged remotely on the tool holder (1).

2. A deburring tool according to Claim 1, characterised in that the further cutting tools (12, 13, 20) are arranged behind the cutting blades (9) in the feeding direction (4).

3. A deburring tool according to Claim 1 or 2, characterised in that the further cutting tools (12, 13, 20) are arranged in front of the cutting blades (9) in the feeding direction (4).

4. A deburring tool according to one of Claims 1 - 3, characterised in that the cutting tool (12) is constructed as a chamfer- or forming blade.

5. A deburring tool according to one of Claims 1 - 3, characterised in that the cutting tool (13) is constructed as a plane- or forming blade.

6. A deburring tool according to one of Claims 1 - 3, characterised in that the cutting tool (20) is constructed as a borer or miller.

## Revendications

1. Outil d'ébavurage pour l'ébavurage centré des bords de perçages, formé d'un porte-outil (1) entraîné en rotation sur lequel sont disposées une ou plusieurs lames (9) mobiles radialement, **caractérisé** en ce que d'autres outils de coupe (12, 13, 20) sont disposés sur le porte-outil (1) à une distance axiale (16, 17, 18) des lames (9).

2. Outil d'ébavurage selon la revendication 1, **caractérisé** en ce que les autres outils de coupe (12, 13, 20) sont disposés derrière les lames (9), dans le sens d'avance (4).

3. Outil d'ébavurage selon la revendication 1 ou 2, **caractérisé** en ce que les autres outils de coupe (12, 13, 20) sont disposés devant les lames (9), dans le sens d'avance (4).

4. Outil d'ébavurage selon l'une des revendications 1 à 3, **caractérisé** en ce que l'outil de coupe (12) est conçu comme une lame de chanfreinage ou de profilage.

5. Outil d'ébavurage selon l'une des revendications 1 à 3, **caractérisé** en ce que l'outil de coupe (13) est conçu comme une lame plane ou de profilage.

6. Outil d'ébavurage selon l'une des revendications 1 à 3, **caractérisé** en ce que l'outil de coupe (20) est conçu comme un foret ou comme une fraise.
